# EUROPÄISCHE PATENTSCHRIFT

(11) **EP 3 695 181 B1**
(45) Veröffentlichungstag und Bekanntmachung des Hinweises auf die Patenterteilung: **23.08.2023**
(21) Anmeldenummer: 18785602.6
(22) Anmeldetag: 11.10.2018
(51) Int. Cl.: F27B 7/20, C04B 7/36, C04B 7/60, F27D 17/00

(54) **VERFAHREN UND ANLAGE ZUR HERSTELLUNG VON ZEMENTKLINKER ODER EINES ANDEREN MINERALISCHEN PRODUKTS**
METHOD AND PLANT FOR PRODUCING CEMENT CLINKER OR ANOTHER MINERAL PRODUCT
PROCÉDÉ ET INSTALLATION POUR LA PRODUCTION D'UN CLINKER DE CIMENT OU D'UN AUTRE PRODUIT MINÉRAL

(30) Priorität: 12.10.2017 DE 102017123746
(43) Veröffentlichungstag der Anmeldung: 19.08.2020
(73) Patentinhaber: thyssenkrupp Industrial Solutions AG, 45143 Essen (DE); thyssenkrupp AG, 45143 Essen (DE)
(72) Erfinder: HAACK, Aimo Dirk, 59320 Ennigerloh (DE); UNGETHÜM, Frank, 33604 Bielefeld (DE); UHDE, Martin, 59320 Ennigerloh (DE)
(74) Vertreter: thyssenkrupp Intellectual Property GmbH
(86) Internationale Anmeldenummer: PCT/EP2018/077711
(87) Internationale Veröffentlichungsnummer: WO 2019/072957

(56) Entgegenhaltungen:
- EP-A1- 2 287 126
- WO-A1-2009/110356
- DE-A1- 19 851 646

## Beschreibung

Die Erfindung betrifft ein Verfahren und eine Anlage zur Herstellung von Zementklinker oder eines anderen mineralischen Produkts.

Bei der Zementklinkerherstellung wird Rohmehl in einem Vorwärmer mit Abgas eines Ofens und/oder eines gegebenenfalls vorhandenen Kalzinators vorgewärmt, gegebenenfalls anschließend in dem Kalzinator vorkalziniert und schließlich in dem Ofen fertiggebrannt, d.h. abschließend kalziniert und gesintert.

Beispielsweise durch den zunehmenden Einsatz von Ersatzbrennstoffen und die damit verbundene Substitution von konventionellen, fossilen Brennstoffen, wie Kohle, Gas und Öl, steigt der Eintrag von Chlor und anderen unerwünschten Substanzen (insbesondere Alkalien und Schwefelverbindungen) in den Herstellungsprozess von Zementklinker. Im Rahmen der Herstellung des Zementklinkers bildet sich dann zwischen dem Vorwärmer und dem Ofen ein Kreislauf des Chlors und der anderen Substanzen aus, der zu erheblichen Betriebsproblemen führen kann, so dass dieser entlastet werden muss. Dazu kann ein Bypasssystem vorgesehen sein, über das ein Teil des aus dem Ofen kommenden, dann üblicherweise noch ca. 1100°C bis 1300°C heißen Abgases zwischen dem Ofen und dem Vorwärmer, insbesondere zwischen dem Ofen und dem Kalzinator, als Bypassgas abgezweigt werden kann. Bei dieser Temperatur liegen die kreislaufbildenden Substanzen gasförmig vor, so dass diese über das abgezweigte Bypassgas effektiv aus dem Kreislauf herausgenommen werden können. Anschließend müssen die kreislaufbildenden Substanzen jedoch auch von den übrigen Gasbestandteilen des Bypassgases separiert werden, um diese unabhängig von dem dann gereinigten Bypassgas, das üblicherweise nach einer weitergehenden Abgasnachbehandlung in die Atmosphäre entlassen wird, zu entsorgen. Für dieses Abscheiden wird Roh- beziehungsweise Ofenmehl genutzt, das mit dem Bypassgas abgezogen wird und das als Trägermaterial für ein Ausschleusen der kreislaufbildenden Substanzen dient. Dazu kondensieren die kreislaufbildenden Substanzen an den Partikeln des Ofenmehls, sobald deren jeweilige Kondensationstemperatur infolge einer Abkühlung des Bypassgases während der Durchströmung des Bypasssystems unterschritten wurde. Die mit den kreislaufbildenden Substanzen belasteten Partikel können dann mittels einer Entstaubungsvorrichtung aus dem Bypassgas abgeschieden werden. Ein Nachteil, der sich durch den Betrieb eines solchen Bypasssystems einstellt, liegt darin, dass das als Trägermaterial für das Abscheiden der kreislaufbildenden Substanzen genutzte Ofenmehl nicht zur Herstellung von Zementklinker genutzt werden kann, womit folglich ein Verlust an Ausgangsmaterial sowie an Energie- und Anlagenkapazität einhergeht. Weiterhin geht dabei auch die in dem gereinigten Bypassgas enthaltene thermische Energie verloren, da diese insbesondere nicht für die thermische Vorbehandlung des Ofenmehls in dem Vorwärmer und dem Kalzinator zur Verfügung steht.

Die DE 197 18 017 C1 offenbart ein Verfahren zur Herstellung von Zementklinker, bei dem aus einem Ofen ein Teil des mit Chlorverbindungen belasteten Abgases abgezweigt und mittels eines Kondensators gereinigt wird. Das gereinigte Abgas wird anschließend entweder in den Ofen oder in einen Ofeneinlauf zurückgeführt.

Die DE 198 51 646 A1 beschreibt ein Verfahren und eine Vorrichtung zum thermischen Behandeln von insbesondere Zement-Rohmaterial, wobei dieses Rohmaterial zunächst einen Materialvorwärmer und anschließend einen Kalzinator durchläuft, bevor dieses in einen Ofen überführt wird. Dabei wird das Material unter Gasabschluss in den Ofen überführt, während das Abgas des Ofens unter Umgehung des Kalzinators dem Materialvorwärmer zugeführt wird. Das Abgas des Kalzinators wird ebenfalls in den Materialvorwärmer eingeleitet. Dabei kann zudem vorgesehen sein, dass das Abgas des Kalzinators zunächst über eine Kondensationsvorrichtung geführt wird, in der Natrium und Kalium aus dem Abgas abgeschieden werden.

Die EP 2 287 126 A1 offenbart ein Verfahren und eine Anlage zur Herstellung von Zementklinker, bei der zwischen einem Ofen und einem Zyklon mittels einer Sonde ein unter anderem mit Chlor belastetes Bypassgas aus dem Abgas des Ofens abgezweigt und durch das Zuführen von Kühlluft mittels eines Gebläses auf eine Temperatur von weniger als 700 °C gekühlt wird, was als Schmelzpunkt einer "Chlor-Komponente" angegeben ist. In einem Zyklon werden dann in dem Bypassgas enthaltene, grobe Partikel abgesondert und zu dem "Zementofensystem" zurückgeführt. Das den Zyklon verlassende Bypassgas wird anschließend mit einer Temperatur, die zwischen 400°C und 700 °C liegt, in einem Hochtemperaturschlauchfilter gefiltert, wobei in dem Bypassgas noch enthaltene, feine Partikel herausgefiltert und einem Staubbehälter zugeführt werden. Dieser feine Partikelstaub soll mit Chlor belastet sein. Das den Hochtemperaturschlauchfilter verlassende Bypassgas kann anschließend mittels eines Gebläses in die als "Zementofensystem" bezeichnete Anlage zurückgeführt werden. Die WO 2009/110356 A1 offenbart ein dazu vergleichbares Verfahren.

Der Erfindung lag die Aufgabe zugrunde, die genannten Nachteile, die sich aus dem beschriebenen Betrieb eines Bypasssystems einer Anlage zur Herstellung von Zementklinker oder eines anderen mineralischen Produkts ergeben, zumindest teilweise zu vermindern.

Diese Aufgabe wird durch ein Verfahren gemäß dem Patentanspruch 1 sowie mittels einer Anlage gemäß dem Patentanspruch 9 gelöst. Bevorzugte Ausführungsformen des erfindungsgemäßen Verfahrens und vorteilhafte Ausgestaltungsformen der erfindungsgemäßen Anlage sind Gegenstände der weiteren Patentansprüche und/oder ergeben sich aus der nachfolgenden Beschreibung der Erfindung.

Die Erfindung beruht einerseits auf der Idee, dass durch ein Ausschleusen der kreislaufbildenden Substanzen vor deren Kondensation an den Partikeln des mit dem Bypassgas mitgerissenen Ofenmehls ermöglicht wird, das Ofenmehl in den Prozess der Herstellung des Zementklinkers oder des sonstigen mineralischen Produkts zurückzuführen, so dass dieses dafür nicht verloren geht. Weiterhin kann durch ein Rückführen des von den kreislaufbildenden Substanzen gereinigten Bypassgases in den Herstellungsprozess die darin enthaltene Wärmeenergie zumindest teilweise noch genutzt werden. Zudem kann dadurch auf eine separate Abgasnachbehandlung für das gereinigte Bypassgas verzichtet werden, da dieses zusammen mit dem Restabgas, d.h. mit demjenigen Anteil des aus dem Ofen stammenden Abgases, der nicht als Bypassgas abgezweigt sondern dem Vorwärmer und/oder Kalzinator zugeführt wurde, nachbehandelt werden kann.

Dementsprechend ist ein Verfahren zur Herstellung von Zementklinker oder eines anderen mineralischen Produkts (z.B. Branntkalk oder Dolomit) vorgesehen, bei dem zwischen einem Ofen, bei dem es sich insbesondere um einen Drehrohrofen, einen Schachtofen oder eine Flugstrombehandlungsvorrichtung handeln kann, und einer thermischen Vorkonditioniervorrichtung ein mit mindestens einer kreislaufbildenden Substanz (nachfolgend verkürzt als "Substanz" bezeichnet), insbesondere einer Alkalie, einem Chlorid oder einer Schwefelverbindung, in der Gasphase belastetes Bypassgas aus Abgas des Ofens abgezweigt und das verbliebene Restabgas der Vorkonditioniervorrichtung zugeführt wird. Das Bypassgas wird dann soweit gekühlt, vorzugsweise aktiv gekühlt, indem eine entsprechende Kühlvorrichtung eingesetzt wird, dass die Substanz gezielt auf einer Oberfläche einer Kondensationsvorrichtung auskondensiert, so dass die Substanz getrennt von dem gereinigten Bypassgas aus der Kondensationsvorrichtung abgeführt werden kann. Das gereinigte Bypassgas wird dann in das Restabgas, insbesondere in das in der Vorkonditioniervorrichtung oder in einem Einlaufgehäuse des Ofens strömende Restabgas, zurückgeführt. Folglich soll eine gegebenenfalls ausschließlich für diesen Zweck vorgesehene Kondensationsvorrichtung bereitgestellt werden, die einer durch Kondensieren bewirkten Anlagerung und damit Ausschleusung der Substanz aus dem Bypassgas dient. Eine Nutzung von mit dem Bypassgas mitgeführtem Ofenmehl als Trägermaterial, an dem sich die Substanz anlagern kann, ist folglich nicht erforderlich und soll vorzugsweise so weit wie möglich vermieden werden.

Um ein gezieltes Kondensieren der Substanz an der Oberfläche der Kondensationsvorrichtung zu erreichen, kann insbesondere vorgesehen sein, dass diese aktiv gekühlt ist. Weiterhin kann die Oberfläche der Kondensationsvorrichtung von einem Kondensationselement ausgebildet sein, das durch seine Formgebung, beispielsweise in der Art eines durchströmten Filterelements (z.B. in Form eines Gitters und/oder einer Schüttung), eine möglichst große Oberfläche für einen Kontakt mit dem Bypassgas zur Verfügung stellt und/oder ein Koaleszieren von bereits auskondensieren Tröpfchen oder ein Filtern von bereits auskondensierten Partikeln der Substanz fördert.

Erfindungsgemäß ist weiterhin vorgesehen, dass das gereinigte Bypassgas erwärmt wird. Ein Erwärmen des gereinigten Bypassgases kann insbesondere bis zum Erreichen einer Temperatur vorgesehen sein, die ungefähr derjenigen entspricht, die das Restabgas im Bereich der Mündung der Bypassleitung aufweist. Dabei kann beispielsweise eine Differenz von bis zu ± 50°C zugelassen sein. Dadurch kann eine möglichst gute thermische Durchmischung des in den Abgasstrang rückgeführten, gereinigten Bypassgases mit dem dortigen Restabgas führen, was sich vorteilhaft hinsichtlich einer möglichst gleichförmigen Erwärmung des Roh- beziehungsweise Ofenmehls mit dem Zweck der Vorwärmung oder Kalzinierung auswirken kann. Weiterhin kann das Erwärmen des gereinigten Bypassgases unter Umständen eine unerwünschte Kondensatbildung in dem stromab der Kondensationsvorrichtung liegenden Abschnitt der Bypassleitung vermeiden, die anderenfalls zu Ablagerungen und/oder Korrosionsproblemen führen kann.

Eine zur Durchführung eines erfindungsgemäßen Verfahrens geeignete Anlage umfasst zumindest einen Ofen, eine thermische Vorkonditioniervorrichtung, die in einen Abgasstrang des Ofens integriert ist, sowie ein Bypasssystem, wobei das Bypasssystem eine zwischen dem Ofen und der Vorkonditioniervorrichtung aus dem Abgasstrang abzweigende Bypassleitung zur Abzweigung eines mit mindestens einer kreislaufbildenden Substanz in der Gasphase belasteten Bypassgases aus Abgas des Ofens umfasst. Dabei ist vorgesehen, dass die Bypassleitung wieder in den Abgasstrang, insbesondere in die Vorkonditioniervorrichtung oder in ein Einlaufgehäuse des Ofens, das einen Einlass des Ofens mit der Brennkammer material- und abgasführend verbindet, mündet, dass in die Bypassleitung eine Kondensationsvorrichtung mit einer Oberfläche, an der die Substanz auskondensiert und/oder an der sich Tröpfchen oder Partikel von bereits auskondensierter Substanz sammeln, integriert ist und dass Mittel zum Abführen der auskondensierten Substanz aus der Kondensationsvorrichtung getrennt von dem dann gereinigten Bypassgas vorgesehen sind. Weiterhin umfasst eine erfindungsgemäße Anlage eine stromab der Kondensationsvorrichtung in die Bypassleitung integrierte Heizvorrichtung.

Bei der thermischen Vorkonditioniervorrichtung kann es sich insbesondere um einen Vorwärmer und/oder um einen Kalzinator handeln. Dabei kann als Vorwärmer eine Vorrichtung verstanden werden, in der ein zur weiteren thermischen Behandlung in dem Ofen vorgesehenes Material (Rohmehl beziehungsweise Ofenmehl) durch das aus dem Ofen stammende Abgas thermisch vorbehandelt wird, wobei dieses in dem Vorwärmer primär erwärmt und nur in einem relativ geringen Maße (z.B. bis maximal 20% oder 25% oder 30%) kalziniert wird, während dieses in einem Kalzinator, wiederum aufgrund einer thermischen Behandlung mittels des aus dem Ofen stammenden Abgases, zu einem höheren Grad (z.B. bis zu zwischen 70% und 95%) kalziniert wird.

Gemäß einer bevorzugten Ausführungsform eines erfindungsgemäßen Verfahrens kann vorgesehen sein, dass das belastete Bypassgas ausschließlich in der Kondensationsvorrichtung aktiv gekühlt wird. Hierfür kann vorgesehen sein, dass die Kondensationsvorrichtung einer erfindungsgemäßen Anlage eine Kühleinrichtung zur Kühlung des Bypassgases umfasst. Ein Kühlen des noch belasteten Bypassgases, das dem Ziel eines gezielten Anlagerns der Substanz an der Oberfläche der Kondensationsvorrichtung dient, ausschließlich in der Kondensationsvorrichtung durchzuführen, kann ausreichend sein, weil hierfür regelmäßig eine nur relativ geringe Absenkung der Temperatur des Bypassgases und damit der gasförmigen Substanz, beispielsweise ausgehend von ca. 1200°C im Bereich des Abzweigs der Bypassleitung auf Werte zwischen 600°C und 700°C, erforderlich ist. Gegebenenfalls kann es daher auch sinnvoll sein, die Bypassleitung in zumindest einem Abschnitt zwischen dem Abzweig und dem Kondensator thermisch isolierend auszubilden, um eine zu starke Abkühlung und damit Kondensation der Substanz in einem relevanten Ausmaß bereits vor der Kondensationsvorrichtung zu vermeiden, was anderenfalls zu negativen Beeinflussungen dieses Abschnitts der Bypassleitung führen könnte. Dies gilt insbesondere, sofern, wie dies vorzugsweise vorgesehen sein kann, in diesen Abschnitt der Bypassleitung eine oder mehrere weitere Funktionskomponenten integriert sind.

Gegebenenfalls kann es auch sinnvoll sein, das belastete Bypassgas bereits vor dem Zuführen zu der beziehungsweise vor dem Eintritt in die Kondensationsvorrichtung aktiv mittels einer entsprechenden Kühlvorrichtung zu kühlen. Eine erfindungsgemäße Anlage würde dazu eine zwischen dem Abzweig der Bypassleitung und der Kondensationsvorrichtung in die Bypassleitung integrierte Kühlvorrichtung aufweisen. Durch eine solche aktive Kühlung des Bypassgases schon vor dem Zuführen zu der Kondensationsvorrichtung kann insbesondere erreicht werden, dass das belastete Bypassgas mit einer Temperatur, die nur geringfügig oberhalb der Kondensationstemperatur der Substanz, bei mehreren Substanzen vorzugsweise der höchsten der Kondensationstemperaturen der Substanzen, liegt, in die Kondensationsvorrichtung einströmt. Dadurch kann sich die konstruktive Ausgestaltung der Kondensationsvorrichtung vereinfachen, da dann mittels dieser lediglich noch eine geringfügige zusätzliche Kühlfunktion bereitgestellt werden muss, um das Kondensieren der Substanz abschließend zu bewirken. Gegebenenfalls kann es dann sogar ausreichend sein, wenn mittels der Kondensationsvorrichtung lediglich noch eine passive Kühlfunktion, d.h. ein Kühlen, das ausschließlich auf einem Wärmeübergang von dem Bypassgas auf das Material der Kondensationsvorrichtung und von dem Material der Kondensationsvorrichtung auf Umgebungsluft, ohne aktive Beaufschlagung der Kondensationsvorrichtung mit einem Kühlmittel, insbesondere einem Kühlgas und/oder einer Kühlflüssigkeit, beruht, bereitgestellt werden muss. Das belastete Bypassgas würde demnach ausschließlich vor dem Zuführen zu der Kondensationsvorrichtung aktiv gekühlt.

Durch das erfindungsgemäße Verfahren beziehungsweise durch die Verwendung einer erfindungsgemäßen Anlage kann und soll in vorteilhafter Weise auf eine Nutzung von staubförmig in dem Bypassgas enthaltenem Ofenmehl als Trägermaterial, das der Anlagerung der auskondensierten Substanz dient, so weit wie möglich verzichtet werden. Vorzugsweise kann daher vorgesehen sein, dass das Verfahren derart ausgeführt wird und die erfindungsgemäße Anlage derart ausgebildet ist, dass möglichst wenig Ofenmehl im Bereich des Abzweigs von dem Bypassgas mitgerissen wird und/oder dass mitgerissenes Ofenmehl möglichst frühzeitig und insbesondere schon vor einer Abkühlung des Bypassgases auf Temperaturen, die in der Nähe der Kondensationstemperatur(en) der Substanz(en) liegen, und folglich insbesondere vor dem Zuführen des Bypassgases zu der Kondensationsvorrichtung aus dem Bypassgas, abgeschieden wird ("Entstauben des Bypassgases").

Um zu erreichen, dass möglichst wenig Ofenmehl von dem Bypassgas mitgerissen wird, kann insbesondere vorgesehen sein, die Strömungsgeschwindigkeit des Bypassgases im Abzweig durch eine entsprechende Auslegung und/oder einen entsprechenden Betrieb einer erfindungsgemäßen Anlage relativ gering beziehungsweise möglichst gering zu halten. Beispielsweise kann vorgesehen sein, dass das Bypassgas mit einer Strömungsgeschwindigkeit zwischen 0,5 m/s und 10 m/s, vorzugsweise zwischen 2 m/s und 7 m/s, aus dem durch den Abgasstrang strömenden Abgas abgezweigt wird.

Für ein Entstauben des Bypassgases kann eine erfindungsgemäße Anlage vorzugsweise eine zwischen dem Abzweig der Bypassleitung und der Kondensationsvorrichtung in die Bypassleitung integrierte Entstaubungsvorrichtung, beispielsweise in Form eines Zyklonabscheiders, aufweisen. Sofern in den Abschnitt der Bypassleitung, der zwischen dem Abzweig und der Kondensationsvorrichtung liegt, eine Kühlvorrichtung für ein aktives Kühlen des Bypassgases vorgesehen ist, sollte vorzugsweise vorgesehen sein, dass die Entstaubungsvorrichtung, sofern vorgesehen, stromauf dieser Kühlvorrichtung angeordnet ist. Dadurch kann einerseits eine Staubbelastung der Kühlvorrichtung und andererseits eine zu frühe Anlagerung von bereits auskondensierter Substanz an den Partikeln des Ofenmehls möglichst weitgehend vermieden werden. Besonders bevorzugt kann vorgesehen sein, dass die Entstaubungsvorrichtung in den Abzweig der Bypassleitung integriert ist beziehungsweise diesen ausbildet.

Der bei der Entstaubung anfallende Staub des Ofenmehls kann vorzugsweise einem dem Ofen zuzuführenden Ofenmehl zugemischt und folglich für den Prozess der Herstellung des Zementklinkers oder des anderen mineralischen Produkts wiedergewonnen werden.

Gemäß einer bevorzugten Ausführungsform eines erfindungsgemäßen Verfahrens kann vorgesehen sein, dass die aus der Kondensationsvorrichtung abgeführte Substanz zu beispielsweise Pellets oder Briketts verpresst wird. Eine erfindungsgemäße Anlage kann dazu eine entsprechende Pressvorrichtung umfassen. Durch ein solches Verpressen kann die weitere Verwendung und/oder Lagerung (beispielsweise eine Deponierung in einem Steinbruch) oder zumindest die Handhabung der abgeführten Substanz verbessert und/oder vereinfacht werden. Dem gleichen Zweck kann dienen, wenn die aus der Kondensationsvorrichtung abgeführte Substanz gekühlt wird. Hierzu kann eine erfindungsgemäße Anlage einen entsprechenden Kühler zum Kühlen der aus der Kondensationsvorrichtung abgeführten Substanz umfassen.

Um eine stets ausreichende große Strömung von Bypassgas über die Bypassleitung sicherzustellen, sollte über der Bypassleitung eine ausreichende Druckdifferenz (Druck im Abzweig im Vergleich zu dem Druck in der Mündung der Bypassleitung) vorliegen. Um dies zu erreichen kann vorgesehen sein, dass in den Abgasstrang zwischen dem Abzweig und der Mündung der Bypassleitung eine Vorrichtung zur Drosselung der Strömung des Restabgases integriert ist. Alternativ oder ergänzend kann hierzu eine in die Bypassleitung integrierte Fördervorrichtung für das Bypassgas, die vorzugsweise in Form eines Gebläses beziehungsweise eines Ventilators ausgebildet sein kann, vorgesehen sein.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die Erfindung wird nachfolgend anhand eines in den Zeichnungen dargestellten Ausführungsbeispiels näher erläutert. In der Zeichnung zeigt:

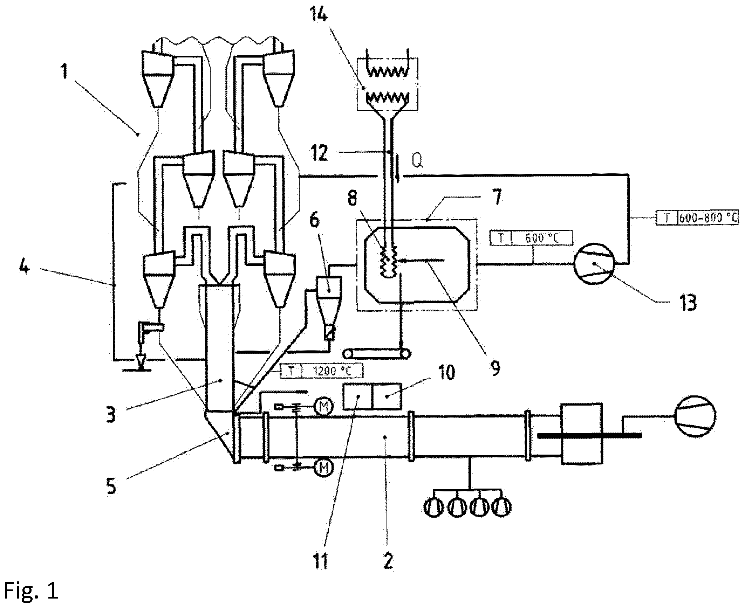

- Fig. 1: eine schematische Darstellung einer erfindungsgemäßen Anlage zur Herstellung von Zementklinker mit einem Bypasssystem.

Die in der Fig. 1 dargestellte Anlage zur Herstellung von Zementklinker umfasst einen Vorwärmer 1 als Teil einer thermischen Vorkonditioniervorrichtung, die wiederum Teil eines Abgasstrangs eines Ofens 2 der Anlage ist. Der Vorwärmer 1 ist in bekannter Weise als mehrstufiger Zyklonvorwärmer ausgebildet. In diesem wird Rohmehl durch einen Wärmetausch mit Abgasen, die aus dem als Drehrohrofen ausgebildeten Ofen 2 stammen, vorgewärmt. Das vorgewärmte Material gelangt anschließend in einen Kalzinator 3, der wiederum einen Teil der thermischen Vorkonditioniervorrichtung darstellt. Der Kalzinator 3 wird ebenfalls von dem aus dem Ofen 2 stammenden Abgas durchströmt. Das in dem Kalzinator 3 bis beispielsweise zu einem Kalziniergrad von 90% vorkalzinierte Rohmehl, das nachfolgend als Ofenmehl bezeichnet wird, wird in dem Ofen 2 fertiggebrannt. Das den Vorwärmer 1 verlassende Abgas wird nachbehandelt, beispielsweise entstaubt und mittels eines SCR-Katalysators (nicht dargestellt) entstickt.

Während des Betriebs der Anlage können sich sogenannte Schadstoffkreisläufe ausbilden, weil bestimmte Substanzen beziehungsweise Schadstoffe, z.B. Chlor, bei den in dem Ofen 2 herrschenden sehr hohen Temperaturen gasförmig vorliegen und daher nicht mit dem Material, d.h. hier dem Zementklinker, sondern mit dem Abgas aus dem Ofen ausgetragen werden. Bei der Abkühlung des Abgases in dem Vorwärmer 1 kondensieren diese Substanzen dann aus und lagern sich an den Partikeln des Rohmehls an und gelangen so wieder in den Ofen 2 zurück, wo diese verdampfen und folglich erneut als Teil des Abgases aus dem Ofen 2 ausgetragen werden. Zur Entlastung dieser Schadstoffkreisläufe ist ein Bypasssystem vorgesehen. Dieses umfasst eine Bypassleitung 4, die im Bereich eines Einlaufs 5 des Ofens abgeht und über die ein Teil der Abgase (beispielsweise bis zu 10%) als Bypassgas abgezogen wird.

Die Temperatur des Bypassgases im Bereich der Abzweigung beträgt ca. 1100°C bis 1300°C und insbesondere ca. 1200°C. Bei diesen Temperaturen liegen die kreislaufbildenden Substanzen in der gasförmigen Phase vor und es findet dann keine relevante Anlagerung dieser Substanzen an den Partikeln des von dem Bypassgas mitgerissenen Ofenmehls statt. Infolgedessen kann in einer sich an den Abzweig anschließenden, in die Bypassleitung 4 integrierten Entstaubungsvorrichtung 6, die in Form eines Zyklonabscheiders ausgebildet ist, das Ofenmehl in vorteilhafter Weise aus dem Bypassgas abgeschieden und, da es noch nicht zu einer relevanten Anlagerung der Substanzen an den Partikeln des Ofenmehls gekommen ist, in den Kalzinator 3 zurückgeführt werden, ohne dass dies der zu erreichenden Entlastung der Schadstoffkreisläufe entgegenwirken würde.

Das entstaubte, jedoch noch mit den Substanzen belastete Bypassgas wird anschließend einer Kondensationsvorrichtung 7 zugeführt, die mindestens ein aktiv mittels einer Kühlflüssigkeit (z.B. Wasser) einer Kühleinrichtung 12 gekühltes Kondensationselement 8 aufweist, das von dem belasteten Bypassgas durch- und/oder umströmt wird. Dabei wird das Bypassgas so weitgehend abgekühlt (z.B. auf Temperaturen zwischen 600°C und 700°C), dass die kreislaufbildenden Substanzen zumindest zu einem Großteil auskondensieren und sich an der von dem Kondensationselement 8 ausgebildeten und mit der Strömung des Bypassgases in Kontakt kommenden Oberfläche anlagern. Diese auskondensierten Tröpfchen und/oder Partikel der Substanzen können dann mittels einer Vorrichtung zur Abreinigung 9, die beispielsweise auf einem Beaufschlagen des Kondensationselements 8 mit einer Reinigungsgasströmung (z.B. Druckluft) und/oder einem Rütteln des Kondensationselements 8 beruhen kann, aus der Kondensationsvorrichtung 7 ausgetragen und weiter behandelt, insbesondere mittels eines Kühlers 10 gekühlt und mittels einer Pressvorrichtung 11 zu Briketts oder Pellets verpresst, werden.

Die in der Kondensationsvorrichtung 7 von dem Bypassgas auf das Kühlmittel übergegangene Wärmeenergie kann in vorteilhafter Weise weitergenutzt werden, was in der Fig. 1 durch einen zusätzlichen Wärmeübertrager 14 der Kühleinrichtung 12 symbolisiert ist. Insbesondere kann vorgesehen sein, dass die dem Kühlmittel entzogene Wärmeenergie Q wieder dem durch die Verwendung der Kondensationsvorrichtung 7 gereinigten Bypassgas zugeführt wird, bevor das gereinigte Bypassgas über die in den Kalzinator 3 mündende Bypassleitung 4 in die Strömung des Restabgases eingebracht wird. Gegebenenfalls kann vorgesehen sein, dass dabei noch zusätzliche Wärmeenergie, die beispielsweise von einem hierfür vorgesehenen Brenner (nicht dargestellt) erzeugt worden ist, in das gereinigte Bypassgas eingebracht wird, um zu erreichen, dass die Temperatur des gereinigten Bypassgases beim Einleiten in das Restabgas in etwa der dortigen Temperatur des Restabgases entspricht.

Um eine stets ausreichende Strömungsmenge und Strömungsgeschwindigkeit des Bypassgases in der Bypassleitung 4 sicherzustellen, ist stromab der Kondensationsvorrichtung 7 und stromauf derjenigen Stelle, an der die Wärmeenergie Q in das gereinigte Bypassgas eingeleitet wird, eine Fördervorrichtung 13 in Form eines Gebläses beziehungsweise eines Ventilators in die Bypassleitung 4 integriert. Dabei stellt die Fördervorrichtung 13 nicht nur eine ausreichend große Strömung des Bypassgases in der Bypassleitung 4 sicher, sondern diese führt infolge der dabei bewirkten Verdichtung des gereinigten Bypassgases auch zu einer Erhöhung der Temperatur des gereinigten Bypassgases. Beispielsweise kann die Temperatur des gereinigten Bypassgases beim Eintritt in die Fördervorrichtung ca. 600°C betragen, die infolge der Verdichtung durch die Fördervorrichtung bis auf ca. 800°C ansteigen kann.

### Liste der Bezugszeichen:

- 1: Vorwärmer / thermische Vorkonditioniervorrichtung
- 2: Ofen
- 3: Kalzinator / thermische Vorkonditioniervorrichtung
- 4: Bypassleitung
- 5: Einlauf des Ofens
- 6: Entstaubungsvorrichtung
- 7: Kondensationsvorrichtung
- 8: Kondensationselement
- 9: Vorrichtung zur Abreinigung der Kondensationsvorrichtung
- 10: Kühler
- 11: Pressvorrichtung
- 12: Kühleinrichtung
- 13: Fördervorrichtung
- 14: Wärmeübertrager der Kühleinrichtung

## Patentansprüche

1. Verfahren zur Herstellung von Zementklinker oder eines anderen mineralischen Produkts, wobei zwischen einem Ofen (2) und einer thermischen Vorkonditioniervorrichtung (1, 3) ein mit mindestens einer kreislaufbildenden Substanz in der Gasphase belastetes Bypassgas aus Abgas des Ofens (2) abgezweigt und das verbliebene Restabgas der Vorkonditioniervorrichtung (1, 3) zugeführt wird, wobei das Bypassgas so weitgehend gekühlt wird, dass die kreislaufbildende Substanz auf einer Oberfläche einer Kondensationsvorrichtung (7) auskondensiert, und anschließend die kreislaufbildende Substanz getrennt von dem dann gereinigten Bypassgas aus der Kondensationsvorrichtung (7) abgeführt wird, wobei das gereinigte Bypassgas in das Restabgas eingeleitet wird, **dadurch gekennzeichnet, dass** das gereinigte Bypassgas erwärmt wird.

2. Verfahren gemäß Anspruch 1, **dadurch gekennzeichnet, dass** das belastete Bypassgas in der Kondensationsvorrichtung (7) aktiv gekühlt wird.

3. Verfahren gemäß Anspruch 1 oder 2, **dadurch gekennzeichnet, dass** das belastete Bypassgas vor dem Zuführen zu der Kondensationsvorrichtung (7) aktiv gekühlt wird.

4. Verfahren gemäß einem der vorhergehenden Ansprüche, **dadurch gekennzeichnet, dass** das Bypassgas mit einer Strömungsgeschwindigkeit, die zwischen 0,5 m/s und 10 m/s, vorzugsweise zwischen 2 m/s und 7 m/s, liegt, abgezweigt wird.

5. Verfahren gemäß einem der vorhergehenden Ansprüche, **dadurch gekennzeichnet, dass** das belastete Bypassgas vor dem Zuführen zu der Kondensationsvorrichtung (7) entstaubt wird.

6. Verfahren gemäß Anspruch 5, **dadurch gekennzeichnet, dass** das bei dem Entstauben anfallende Material dem Ofen (2) zugeführt wird.

7. Verfahren gemäß einem der vorhergehenden Ansprüche, **dadurch gekennzeichnet, dass** die aus der Kondensationsvorrichtung (7) abgeführte Substanz verpresst wird.

8. Verfahren gemäß einem der vorhergehenden Ansprüche, **dadurch gekennzeichnet, dass** die aus der Kondensationsvorrichtung (7) abgeführte Substanz gekühlt wird.

9. Anlage zur Herstellung von Zementklinker oder eines anderen mineralischen Produkts mit einem Ofen (2), einer thermischen Vorkonditioniervorrichtung (1, 3), die in einen Abgasstrang des Ofens (2) integriert ist, sowie mit einem Bypasssystem, wobei das Bypasssystem eine zwischen dem Ofen (2) und der Vorkonditioniervorrichtung (1, 3) aus dem Abgasstrang des Ofens (2) abzweigende Bypassleitung (4) zur Abzweigung eines mit mindestens einer kreislaufbildenden Substanz in der Gasphase belasteten Bypassgases aus Abgas des Ofens (2) umfasst, wobei die Bypassleitung (4) in den Abgasstrang mündet, in die Bypassleitung (4) eine Kondensationsvorrichtung (7) mit einer Oberfläche, an der die gasförmige Substanz auskondensiert, integriert ist und Mittel zum Abführen der Substanz aus der Kondensationsvorrichtung (7) getrennt von dem gereinigten Bypassgas vorgesehen sind, **gekennzeichnet durch** eine stromab der Kondensationsvorrichtung (7) in die Bypassleitung (4) integrierte Heizvorrichtung.

10. Anlage gemäß Anspruch 9, **dadurch gekennzeichnet, dass** die Kondensationsvorrichtung (7) eine Kühleinrichtung (12) zur Kühlung des Bypassgases umfasst.

11. Anlage gemäß Anspruch 9 oder 10, **gekennzeichnet durch** eine zwischen dem Abzweig der Bypassleitung (4) und der Kondensationsvorrichtung (7) in die Bypassleitung (4) integrierte Kühlvorrichtung.

12. Anlage gemäß einem der Ansprüche 9 bis 11, **gekennzeichnet durch** eine zwischen dem Abzweig der Bypassleitung (4) und der Kondensationsvorrichtung (7) in die Bypassleitung (4) integrierte Entstaubungsvorrichtung (6).

13. Anlage gemäß einem der Ansprüche 9 bis 12, **gekennzeichnet durch** eine in die Bypassleitung (4) integrierte Fördervorrichtung (13) für das Bypassgas.

14. Anlage gemäß einem der Ansprüche 9 bis 13, **dadurch gekennzeichnet, dass** die Bypassleitung (4) in zumindest einem Abschnitt zwischen dem Abzweig und der Kondensationsvorrichtung (7) thermisch isolierend ausgebildet ist.

## Claims

1. A method for producing cement clinker or another mineral product, wherein, between a kiln (2) and a thermal preconditioning device (1, 3), a bypass gas laden with at least one cycle-forming substance in the gas phase is branched off from flue gas of the kiln (2) and the remaining residual flue gas is fed to the preconditioning device (1, 3), wherein the bypass gas is cooled to such an extent that the cycle-forming substance is condensed out on a surface of a condensation device (7), and subsequently the cycle-forming substance is discharged from the condensation device (7) separately from the then cleaned bypass gas, wherein the cleaned bypass gas is introduced into the residual flue gas, **characterized in that** the cleaned bypass gas is heated.

2. The method as claimed in claim 1, **characterized in that** the laden bypass gas is actively cooled in the condensation device (7).

3. The method as claimed in claim 1 or 2, **characterized in that** the laden bypass gas is actively cooled before the feeding to the condensation device (7).

4. The method as claimed in one of the preceding claims, **characterized in that** the bypass gas is branched off at a flow velocity that lies between 0.5 m/s and 10 m/s, preferably between 2 m/s and 7 m/s.

5. The method as claimed in one of the preceding claims, **characterized in that** the laden bypass gas is dedusted before the feeding to the condensation device (7).

6. The method as claimed in claim 5, **characterized in that** the material occurring during the dedusting is fed to the kiln (2).

7. The method as claimed in one of the preceding claims, **characterized in that** the substance discharged from the condensation device (7) is pressed.

8. The method as claimed in one of the preceding claims, **characterized in that** the substance discharged from the condensation device (7) is cooled.

9. A plant for producing cement clinker or another mineral product with a kiln (2), a thermal preconditioning device (1, 3), which is integrated in a flue gas line of the kiln (2), and also with a bypass system, wherein the bypass system comprises a bypass line (4), branching off from the flue gas line of the kiln (2) between the kiln (2) and the preconditioning device (1, 3), for branching off a bypass gas laden with at least one cycle-forming substance in the gas phase from flue gas of the kiln (2), wherein the bypass line (4) enters the flue gas line, a condensation device (7) with a surface on which the gaseous substance condenses out is integrated in the bypass line (4) and means for discharging the substance from the condensation device (7) separately from the cleaned bypass gas are provided, **characterized by** a heating device integrated in the bypass line (4) downstream of the condensation device (7).

10. The plant as claimed in claim 9, **characterized in that** the condensation device (7) comprises a cooling device (12) for cooling the bypass gas.

11. The plant as claimed in claim 9 or 10, **characterized by** a cooling device integrated in the bypass line (4) between the branch-off of the bypass line (4) and the condensation device (7).

12. The plant as claimed in one of claims 9 to 11, **characterized by** a dedusting device (6) integrated in the bypass line (4) between the branch-off of the bypass line (4) and the condensation device (7).

13. The plant as claimed in one of claims 9 to 12, **characterized by** a delivery device (13) for the bypass gas integrated in the bypass line (4).

14. The plant as claimed in one of claims 9 to 13, **characterized in that** the bypass line (4) is formed in a thermally insulating manner in at least a portion between the branch-off and the condensation device (7).

## Revendications

1. Procédé de fabrication de clinker de ciment ou d'un autre produit minéral, dans lequel, entre un four (2) et un dispositif de préconditionnement thermique (1, 3), un gaz de dérivation chargé d'au moins une substance formant un cycle dans la phase gazeuse est dérivé des gaz d'échappement du four (2) et les gaz d'échappement résiduels restants sont amenés au dispositif de préconditionnement (1, 3), le gaz de dérivation étant refroidi dans une mesure telle, de sorte que la substance formant le circuit se condense sur une surface d'un dispositif de condensation (7), et ensuite la substance formant le circuit est évacuée du dispositif de condensation (7) séparément du gaz de dérivation alors purifié, le gaz de dérivation purifié étant introduit dans le gaz d'échappement résiduel, **caractérisé en ce que** le gaz de dérivation purifié est réchauffé.

2. Procédé selon la revendication 1, **caractérisé en ce que** le gaz de dérivation chargé est refroidi activement dans le dispositif de condensation (7).

3. Procédé selon la revendication 1 ou 2, **caractérisé en ce que** le gaz de dérivation chargé est activement refroidi avant d'être amené au dispositif de condensation (7).

4. Procédé selon l'une quelconque des revendications précédentes, **caractérisé en ce que** le gaz de dérivation est dérivé à une vitesse d'écoulement comprise entre 0,5 m/s et 10 m/s, de préférence entre 2 m/s et 7 m/s.

5. Procédé selon l'une quelconque des revendications précédentes, **caractérisé en ce que** le gaz de dérivation chargé est dépoussiéré avant d'être envoyé au dispositif de condensation (7).

6. Procédé selon la revendication 5, **caractérisé en ce que** le matériau résultant du dépoussiérage est acheminé vers le four (2).

7. Procédé selon l'une quelconque des revendications précédentes, **caractérisé en ce que** la substance évacuée du dispositif de condensation (7) est comprimée.

8. Procédé selon l'une quelconque des revendications précédentes, **caractérisé en ce que** la substance évacuée du dispositif de condensation (7) est refroidie.

9. Installation de production de clinker de ciment ou d'un autre produit minéral, comprenant un four (2), un dispositif de préconditionnement thermique (1, 3) intégré dans un conduit d'évacuation du four (2), ainsi qu'un système de dérivation, dans lequel le système de dérivation comprend une conduite de dérivation (4) dérivée entre le four (2) et le dispositif de préconditionnement (1, 3) à partir de la ligne d'échappement du four (2) pour dériver un gaz de dérivation chargé d'au moins une substance formant un cycle dans la phase gazeuse à partir de l'échappement du four (2), la conduite de dérivation (4) débouchant dans le circuit de gaz d'échappement, un dispositif de condensation (7) avec une surface sur laquelle la substance gazeuse se condense étant intégré dans la conduite de dérivation (4) et des moyens pour évacuer la substance du dispositif de condensation (7) étant prévus séparément du gaz de dérivation purifié, **caractérisé par** un dispositif de chauffage intégré dans la conduite de dérivation (4) en aval du dispositif de condensation (7).

10. Installation selon la revendication 9, **caractérisée en ce que** le dispositif de condensation (7) comprend un dispositif de refroidissement (12) pour refroidir le gaz de dérivation.

11. Installation selon la revendication 9 ou 10, **caractérisée par** un dispositif de refroidissement intégré dans la conduite de dérivation (4) entre la dérivation de la conduite de dérivation (4) et le dispositif de condensation (7).

12. Installation selon l'une des revendications 9 à 11, **caractérisée par** un dispositif de dépoussiérage (6) intégré dans la conduite de dérivation (4) entre la dérivation de la conduite de dérivation (4) et le dispositif de condensation (7).

13. Installation selon l'une des revendications 9 à 12, **caractérisée par** un dispositif de transport (13) du gaz de dérivation intégré à la conduite de dérivation (4).

14. Installation selon l'une quelconque des revendications 9 à 13, **caractérisée en ce que** la conduite de dérivation (4) est thermiquement isolante dans au moins une portion entre la dérivation et le dispositif de condensation (7).
